Europäisches Patentamt

European Patent Office

Office européen des brevets

(19)

(11) Publication number : **0 476 968 A2**

# (12) EUROPEAN PATENT APPLICATION

(21) Application number : **91308464.6**

(22) Date of filing : **17.09.91**

(51) Int. Cl.$^5$ : **H04L 7/033**

(30) Priority : **21.09.90 US 587362**

(43) Date of publication of application :
**25.03.92 Bulletin 92/13**

(84) Designated Contracting States :
**DE FR GB**

(71) Applicant : **NCR CORPORATION**
**World Headquarters**
**Dayton, Ohio 45479 (US)**

(72) Inventor : **Jibbe, Mahmoud K.**
**2108 Ridgewood**
**Wichita, KS 67208 (US)**

(74) Representative : **Robinson, Robert George**
**International Patent Department NCR Limited**
**915 High Road North Finchley**
**London N12 8QJ (GB)**

(54) **Clock recovery circuit.**

(57) An optical and electrical circuit for passively monitoring and decoding FDDI coded serial transmissions along an optical fiber (101) includes an optical splitter (202) interposed in the monitored optical fiber (101), an optical receiver (204) for converting extracted optical signals into electrical signals and a clock recovery circuit (210) for reproducing the FDDI clock signal. The clock recovery circuit (210) includes an exclusive-OR gate (305) to which are applied the received signal (SR) and a delayed version thereof (SD), the output of the exclusive-OR gate (305) being coupled to a plurality of series connected delay lines (307,309,311) having outputs coupled to an OR gate (313) which provides the recovered clock signal.

EP 0 476 968 A2

FIG. 4

This invention relates to clock recovery circuits of the kind for recovering a clock signal from a serial data transmission signal.

The invention has an application to such a clock recovery circuit where serial data is transmitted over a high speed optical fiber local area network (LAN), such as a Fiber Distributed Data Interface (FDDI) network.

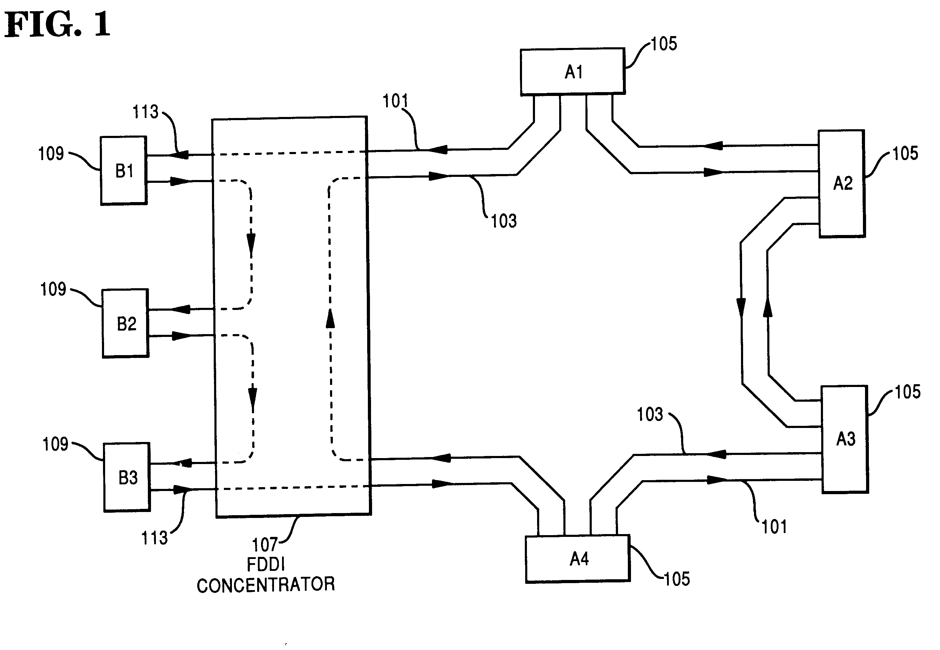

Fiber Distributed Data Interface (FDDI) networks offer the throughput required to fulfill the high data transfer rates demanded by evolving technology. The FDDI network is based on dual counter-rotating 100 megabit per second fiber optic token rings as illustrated in Figure 1. At 100 megabits per second, an FDDI LAN offers an increase in throughput of ten times over contemporary LAN protocols, such as Ethernet networks.

The FDDI network comprises two strands of optical fibers forming primary and secondary rings, designated by reference numerals 101 and 103, respectively. Two types of stations for attachment to the optical fiber rings are defined by current FDDI standards. Class A stations are connected to both of the rings, while class B stations are physically connected to only one ring and are used in conjunction with a wiring concentrator. Stations 105, shown in Figure 1 are class A stations and stations 109 are class B stations. The wiring concentrator 107 is actually a special type of class A station having two connections to the main rings 101 and 103, and single connections to the class B stations.

The FDDI network uses a 4B/5B group encoding scheme wherein four bits of data to be transmitted are mapped into a five bit code for optical transmission. The extra code bit is utilized to differentiate control blocks from data blocks and to provide sufficient clock information to receiving stations. The five-bit codes are chosen so that the maximum run length of consecutive low bits is three. The 4B/5B encoding scheme is provided in Table 1 below.

| 4B binary data | 5B code symbol |
|:---:|:---:|
| 0000 | 11110 |
| 0001 | 01001 |
| 0010 | 10100 |
| 0011 | 10101 |
| 0100 | 01010 |
| 0101 | 01011 |
| 0110 | 01110 |
| 0111 | 01111 |
| 1000 | 10010 |
| 1001 | 10011 |
| 1010 | 10100 |
| 1011 | 10110 |
| 1100 | 11010 |
| 1101 | 11011 |
| 1110 | 11100 |
| 1111 | 11101 |

In addition to the above sixteen five-bit data codes, there are eight five-bit special control codes used by the FDDI network. Information is transmitted in the form of packets from one station to the next along the primary ring at a rate of 125 megabits per second. Utilizing the 4B/5B group-encoding scheme, the optical network must operate at a frequency of 125 megabits per second to transmit input data at the rate of 100 megabits per second.

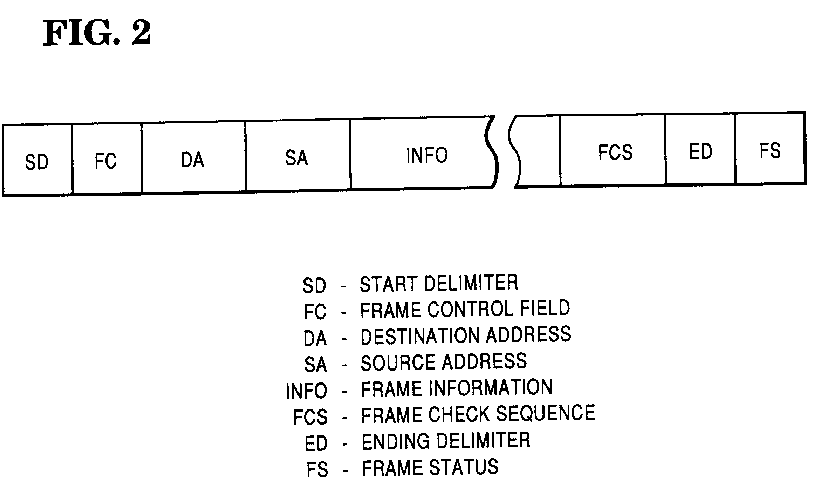

The construction of a packet, or frame, is illustrated in Figure 2. The frame is preceded by a start delimiter SD consisting of J (11000) and K (10001) codes. Following the start delimiter is a frame control field FC which specifies the type of frame, a destination address DA, a source address SA, and the information being transmitted. A frame check sequence FCS, an ending delimiter ED consisting of a T code (01101), and a frame status indicator FS follow the transmitted information. Each station along the ring captures the packet then regenerates and repeats the information placed on the ring by the source station. The addressed destination station copies the information as the packet is processed. Eventually the packet is received back at the source station and removed from the ring.

Each of the stations is actively involved in the transmission of the packeted information about the ring bus. Control information is read by each receiving station to determine the processing to be conducted. The packet may be modified by the station as it processes and regenerates the packet.

Additional information on token rings and methods for coding data for packet communication is provided in U.S. Patent no. 4,665,517. Further information on FDDI network topology is available in an article by John F. McCool, entitled "FDDI: Getting to know the inside of the ring", appearing in Data Communications, March 1988, at pages 185 through 192.

It is an object of the present invention to provide a highly reliable clock recovery circuit suitable for recovering clock signals from high speed data transmission signals.

Therefore, according to the present invention, there is provided a clock recovery for apparatus for recovering a clock signal having a known frequency and period from a serial data transmission, characterized by: a first delay line having an input for receiving said serial data transmission and an output for providing a delayed version of said serial data transmission, and said delay line having a delay time equal to one-half said clock period; an exclusive-OR gate having a first input for receiving said serial data transmission and a second input connected to receive the output of said delay line; a plurality of delay lines connected together in a series, each one of said plurality of delay lines having a delay time equal to said clock period, the first delay line in said series being connected to receive the output of said exclusive-OR gate; and an OR gate connected to receive as inputs the output of said exclusive-OR gate the outputs of each one of said plurality of delay lines, the output of said OR gate being the recovered clock signal.

One embodiment of the present invention will now be described by way of example, with reference to the accompanying drawings, in which:-

Figure 1 illustrates an FDDI network in which the terminal embodying the present invention is used;

Figure 2 illustrates the FDDI data frame structure;

Figure 3 is a block diagram representation of an optical receiver/decoder;

Figure 4 is a block diagram representation of the clock recovery circuit shown in Figure 3; and

Figure 5 is a timing diagram illustrating the operation of the clock recovery circuit shown in Figure 4.

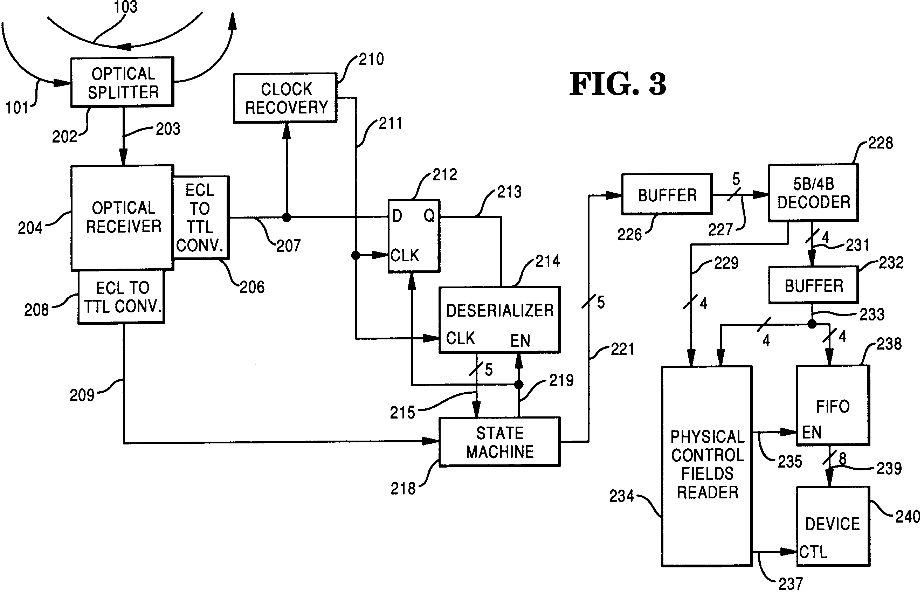

Referring now to Figure 3, an example of an FDDI optical receiver/decoder is shown in block form. The receiver/decoder receives FDDI information packets from an optical splitter 202 interposed in primary ring 101. The optical signal extracted from ring 101 is provided through fiber 203 to an optical receiver 204 which converts the optical data to an ECL data signal. The ECL output of optical receiver 204 is provided to an ECL-to-TTL convertor 206 for conversion to a TTL level signal 207. The optical receiver also generates an ECL level output signal which is set to a HIGH state whenever optical receiver 204 is active, i.e. upon the receipt of optical data by the receiver, and reset to a LOW state when receiver 204 returns to an inactive state following the conclusion of an optical transmission. A second ECL-to-TTL convertor 208 transforms this second ECL level signal to a TTL level "active" signal 209.

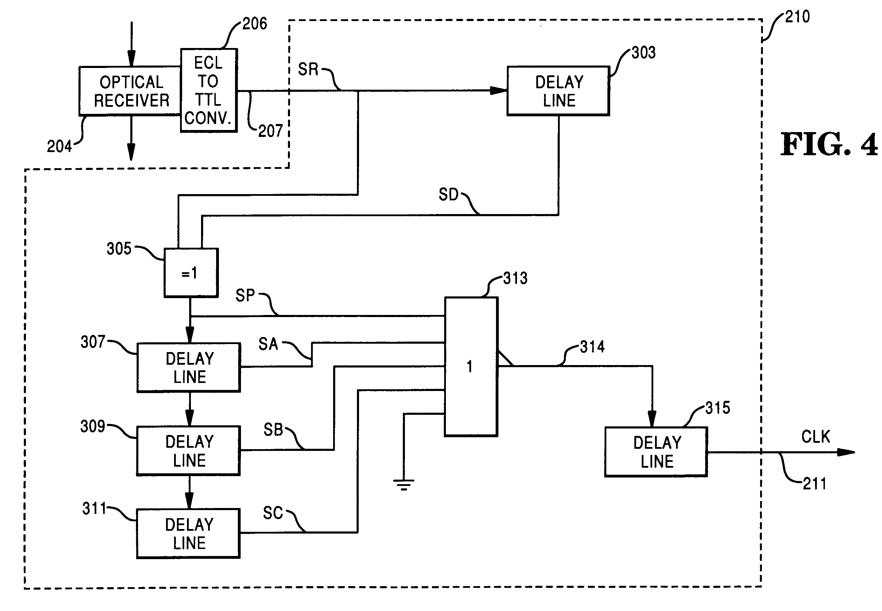

The TTL data signal generated by convertor 206 is provided to a clock recovery circuit 210 which recovers the frequency and phase of the incoming serial data signal from the signal itself. The clock recovery circuit, shown in Figure 4, will be discussed in greater detail below.

The clock output 211 and data signal 207 are provided to the clock and data inputs, respectively, of an edge-triggered D-type flip-flop 212 which samples the data signal in the middle of each pulse in order to minimize noise errors. A buffered data signal 213 generated at the output of the flip-flop and clock signal 211 are provided to a deserializer 214. The serial data signal 213 is sampled and converted into five-bit parallel form by deserializer 214.

A state machine 218 is connected to receive signal 209 from optical receiver 204 and the parallel output of deserializer 214 via a five-bit wide data bus 215. The state machine is responsive to signal 209 to generate an enable signal 219 which is provided to flip-flop 212 and deserializer 214. The enable signal is set to a HIGH level, activating flip-flop 212 and deserializer 214, when signal 209 is at a HIGH level. Upon detection of the first half of a start delimiter (J code = 11000) the state machine enters an active mode, furnishing the five-bit signal and byte clock received from deserializer 214 to a buffer 226.

The output of buffer 226 is fed through bus 227 to a decoder 228. This decoder converts the parallel five-bit signal received from buffer 226 to a four-bit parallel data signal in accordance with the FDDI encoding scheme shown in Table 1 above. Successive four-bit signals are thereafter fed to a buffer 232, physical control fields reader circuit 234 and first-in/first-out circuit 238 for concatenation into eight-bit parallel data signals.

The proper operation of the above-described receiver/decoder circuit is dependent upon accurate recovery of the 125 megahertz FDDI network clock signal by clock recovery circuit 210, which will now be described with reference to Figure 4. The clock recovery circuit includes a first delay line 303 connected to receive the serial data signal, designated as SR, from optical receiver 204. Delay line 303 is selected to provide a delay time of one-half of a clock period. The period of a 125 megahertz clock signal is eight nanoseconds, thus the signal output by delay line 303, designated as signal SD, is a four-nanosecond delayed version of signal SR.

Signals SR and SD are provided as inputs to an Exclusive-OR gate 305 which generates signal SP. Each transition of signal SP will produce a four nanosecond HIGH pulse in signal SP. Signal SP is provided to three eight-nanosecond delay lines, 307, 309 and 311, connected in series. The outputs of these three delay lines, identified as signals SA, SB and SC, are eight, sixteen and twenty-four nanosecond delayed versions of signal SP, respectively.

The recovered clock signal CLK is generated by combining signals SP, SA, SB and SC together in an OR gate 313. An additional delay line 315 is interposed in the output line from OR gate 313 to permit adjustment of the skew between the recovered clock signal and the buffered received data signal.

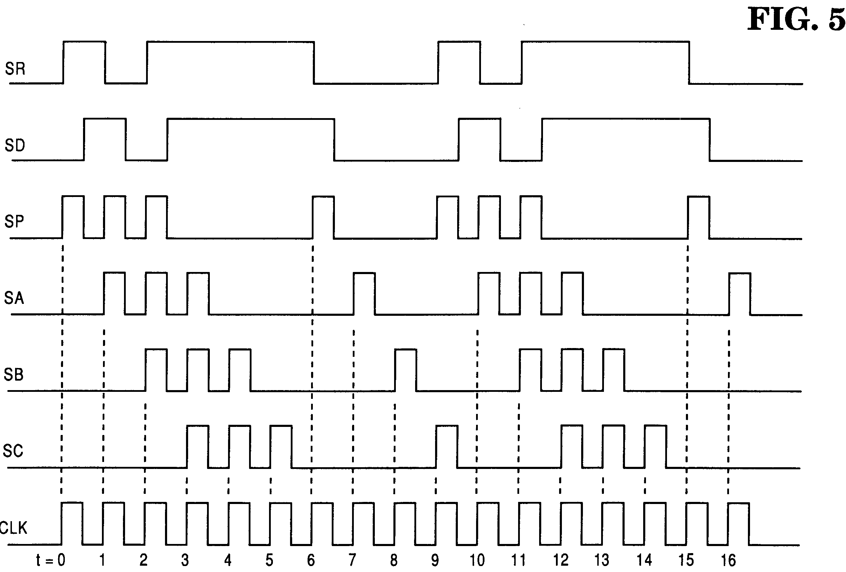

The several signals produced by the clock recovery circuit of Figure 4 in response to receipt of serial data signal SR are shown in the timing diagram of Figure 5. Signal SR as shown in Figure 5 is provided for illustration only. The actual signal SR will consist of the series transmission of five-bit FDDI data and control signals at the rate of 125 megahertz. In accordance with the protocol established for transmission of data on the FDDI ring bus, each level transition, whether from a HIGH state to a LOW state or from a LOW state to a HIGH state represents the transmission of a logic "1". The non-occurrence of a transition during a clock cycle represents the transmission of a logic "0". FDDI standards also require that during the transmission of data, no more than three consecutive zeros may be transmitted or, in other words, signal transitions must occur at intervals not exceeding four clock cycles in duration.

Signal SD is seen to be a one-half clock cycle delayed version of data signal SR. Other than the four nanosecond delay, signals SR and SD are equivalent. Signal SP, the output of Exclusive-OR gate 305, is seen to consist of a series of four nanosecond HIGH pulses, the start of each pulse coinciding with the occurrence of a signal transition in signal SR. Signals SA, SB and SC are seen to be one cycle (eight nanoseconds), two cycle (sixteen nanoseconds) and three cycle (twenty-four nanoseconds) delayed versions of signal SP, respectively. Clock signal CLK is the composite of signals SP SA, SB and SC.

It can thus be seen that there has been described apparatus for connecting to an FDDI network for passively monitoring activities on the network. The connection to the network is established by tapping off an optical fiber or to the passive output of an optical switch by using an optical splitter without degrading the optical signal conducted along the fiber.

The clock recovery circuit recovers a highly reliable, glitch-free clock signal, having a jitter of less than plus or minus eight percent. In addition, only minor changes would be needed (tapping to different points on the delay lines) to recover a clock having a different rate.

The apparatus may be used to discover FDDI ring failures; to assemble information for an error log; to verify timing, data integrity and sequence parameters; or monitor bus utilization.

## Claims

1. Clock recovery apparatus for recovering a clock signal having a known frequency and period from a serial data transmission, characterized by: a first delay line (303) having an input for receiving said serial data transmission and an output for providing a delayed version of said serial data transmission, and said delay line (303) having a delay time equal to one-half said clock period; an exclusive-OR gate (305) having a first input for receiving said serial data transmission and a second input connected to receive the output of said delay line (303); a plurality of delay lines (307,309,311) connected together in a series, each one of said plurality of delay lines (307,309,311) having a delay time equal to said clock period, the first delay line (307) in said series being connected to receive the output of said exclusive-OR gate (305); and an OR gate (313) connected to receive as inputs the output of said exclusive-OR gate (305) the outputs of each one of said plurality of delay lines (307,307,311), the output of said OR gate (313) being the recovered clock signal.

2. Apparatus according to claim 1, characterized in that said serial data is transmitted in the form of a first-type binary digits represented by a logic level transition and second-type binary digits represented by the absence of such a transition, the interval between said transitions not exceeding four clock cycles, and in that said plurality of delay lines (307,309,311) includes three delay lines.

3. Apparatus according to claim 2, characterized in that said clock signal has a frequency of 125 megahertz and a period of eight nanoseconds, wherein said first delay line (303) has a delay time of four nanoseconds; and each one of said plurality of delay lines (307,309,311) has a delay time of eight nanoseconds.

4. Apparatus according to claim 3, characterized in that said serial data transmission comprises consecutively transmitted FDDI standard data codes.

5. Apparatus according to claim 4, characterized in that said FDDI standard data codes consist of five bits.

6. The use of clock recovery apparatus according to any one of the preceding claims, in apparatus for passively monitoring the activities on an FDDI network ring bus (101) including: an optical splitter (202) interposed in said bus (101); an optical receiver (204) connected to receive optical signals from said optical splitter (202) for converting said optical signals into five-bit serial electrical signals; a deserializer (214) connected to receive said electrical signals and the recovered clock signal, for converting said electrical signals to five-bit FDDI coded parallel data signals; and a decoder (228) connected to receive the output of said deserializer (214) for converting said five-bit coded parallel data signals to four-bit parallel data signals.

7. Apparatus according to claim 6, characterized in that the activities on said FDDI ring bus (101) include the transmission of information packets about said ring, each of said packets beginning with a start delimiter and ending with an end delimiter, said delimiters comprising one or more unique five-bit code patters and in that code identifying means (218) are provided, connected to receive said five-bit FDD parallel data signals for identifying said start and end delimiters.

# FIG. 1

# FIG. 2

| SD | FC | DA | SA | INFO | FCS | ED | FS |
|----|----|----|----|------|-----|----|----|

SD - START DELIMITER
FC - FRAME CONTROL FIELD
DA - DESTINATION ADDRESS
SA - SOURCE ADDRESS
INFO - FRAME INFORMATION
FCS - FRAME CHECK SEQUENCE
ED - ENDING DELIMITER
FS - FRAME STATUS

FIG. 3

FIG. 4

EP 0 476 968 A2

# FIG. 5